# EUROPEAN PATENT SPECIFICATION

(11) **EP 2 963 835 B1**
(45) Date of publication and mention of the grant of the patent: **28.11.2018**
(21) Application number: 14185568.4
(22) Date of filing: 19.09.2014
(51) Int. Cl.: H04B 1/3827, H01Q 1/24, H05K 9/00

(54) **Attachment for an electronic communications device**
Aufsatz für eine elektronische Kommunikationsvorrichtung
Accessoire pour un dispositif de communication électronique

(30) Priority: 04.07.2014 AU 2014902583
(43) Date of publication of application: 06.01.2016
(73) Proprietor: Classic Promotions Pty Ltd, Clayton, Victoria 3168 (AU)
(72) Inventor: Leibovich, Aaron, Caulfield North, Victoria V 3161 (AU)
(74) Representative: Burrows, Anthony Gregory

(56) References cited:
- EP-A1- 1 426 982
- WO-A1-2005/004277
- WO-A1-2013/003913
- CA-A1- 2 269 559

## Description

The present invention relates to an attachment for an electronic communications device. In particular, the invention relates to an attachment including a passive conducting element for electromagnetic coupling with the electronic communications device.

Mobile phones, and in particular, smart phones capable of transmitting and receiving both voice and data signals, are being used more often. Consequently, users are spending more time speaking to others using their mobile phones and hence, they are holding the mobile phone in close proximity to their head for increasingly greater cumulative periods of time.

Mobile telephones use electromagnetic radiation to communicate with a base station. The World Health Organisation has classified mobile phone radiation as possibly carcinogenic and recommend that users reduce their exposure to the electromagnetic radiation emitted from mobile phones. Therefore, there is a concern by some users that the radiation from mobile phones may be harmful.

Mobile phone manufacturers and health advocates concerned about the increasing incidence of brain cancers amongst users who regularly use their mobile phone recommend use of a headset arrangement during calls. However, users generally prefer to hold a mobile phone in close proximity to their head when using their mobile phone as it is more convenient.

The need to carry a headset in addition to a mobile phone is also inconvenient and therefore many users tend not to use headset arrangements during telephone calls for this reason. There is also a suggestion that headset arrangements comprised of earphones connected to the mobile phone via a conducting wire in which the earphones are directly inserted into a user's ears present, and potentially increase, the same dangers associated mobile phone radiation. Many users therefore do not accept the use of such headset arrangements to be an acceptable solution to the problem.

Air tube headsets have been proposed as an alternative solution to the use of conventional headset arrangements as a means of enabling a user to avoid holding the mobile phone in close proximity to their head during mobile phone use. Air tube headsets, commonly used as a sound transmitting device for passengers in aeroplanes, are hollow plastic tubing formed into a Y-shaped (or fork) arrangement so that the tubing may be connected to, and extends from, the mobile phone to a user's ears. As hollow air tubing does not contain any wires or conducting material, it is often described as an alternative and safe method of achieving mobile sound transmission and allows the user to hold the phone away from the head during use. However, hollow air tube headsets have a number of disadvantages. Firstly, the need to carry the air tube headset is inconvenient and therefore many users tend not to use air tube headsets for this reason. Secondly, many users report inferior sound transmission and sound quality with the use of such headsets and therefore avoid using them.

Manufacturers of many electronic communications devices include warnings in their product literature in relation to radiation risks. For example, most manufacturers of mobile phones generally include warnings regarding the use of their products in relation to the risk of electromagnetic radiation to the user. In particular, product literature will often include recommendations to users to hold the mobile phone a short distance away from the user's head to reduce the risks associated with exposing the user's head to radiation at the levels in the immediate vicinity of the device. In the case of mobile phones, recommendations in manufacturers' product literature range from 10mm to 25mm. Unfortunately, these recommendations are rarely followed by users who generally press the mobile phone against their head when using the phone.

Various devices have been proposed to reduce exposure to potentially harmful radiation from electronic communications devices including mobile phones. Although protective casings including a passive antenna which is intended (when used) to reduce the amount of electromagnetic radiation directed toward the user, it is difficult to persuade a user to replace their existing protective case with a new case comprising a passive antenna for the purpose of reducing exposure to radiation. Generally, users purchase a protective casing at the same time that they purchase their electronic communications device and are reluctant to replace the casing without reason.

As a result, manufacturers of protective casings comprising a passive antenna manufacture a wide range of styles and colours of protective cases to suit a wide range of user preferences. Of course, this requirement significantly increases a manufacturer's inventory, storage and shipping costs and increases the prospects of needing to discard, or substantially reduce the sale price, of stock in instances where the style/colour of the protective casing is not considered attractive to users and excess stock remains.

Conventional protective casings described above also have the associated disadvantage of reducing the signal strength of the mobile phone thereby affecting a user's ability to connect and stay connected to the mobile phone network. Of course, any deterioration of signal strength resulting from the use of a protective casing will cause users to remove and discard the protective casing.

A need therefore exists for an alternative device to reduce the exposure of mobile phone radiation to a user's head during mobile phone use that is safe, convenient, and that does not result in any compromise of the sound quality or signal strength of the mobile phone. Further, there is a need for such a device to be capable of use with existing protective casings such that they can be fitted to mobile phones without requiring the user to discard their existing protective casing.

WO2013/003913A discloses a case or attachment for an electronic communications device including added materials that exhibit dielectric properties and a passive antenna either incorporated within or affixed to the case or attachment and held in sufficiently close proximity to the electronic communications device such that the passive antenna is electromagnetically coupled to the device, the arrangement reducing the radiation directed toward a user.

EP1426982A discloses a laminated soft magnetic member, which comprises a laminated body in which 1 mu or less thick soft magnetic metal layer and an insulating layer are laminated alternately and is 0.2 mm or less in overall thickness, is excellent in permeability in the high frequency band exceeding 800 MHz, and accordingly, by being attached to a cellular phone, can improve the radiation efficiency of the electromagnetic wave on the side opposite to the head of a human body and is preferable as a member for the countermeasure against SAR.

CA2269559A discloses a radiation protection device which consists of a single layer of artificial dielectric/conductive conductive polymer or three layers (one conductive polymer glued between two absorbing layers) of materials. A thin sheet of material (single layer or three layers) is placed between cellular/pcs phone antenna and the user's head.

According to one aspect, the present invention provides an attachment for an electronic communications device including a conducting element that is coated on one side with layers of dielectric material and securely affixed to a non-conducting substrate such that the overall dimensions and thickness of the attachment are sufficiently small that it may be attached to a surface of an electronic communications device whilst allowing the use of any protective casing preferred by the user, characterised in that the dielectric material is a composition including, as a major proportion of the composition, Al₂O₃, SiO₂ and Ag₂O.

In an embodiment, the non-conducting substrate comprises PTFE (polytetrafluoroethylene) that is 0.2mm in thickness. The choice of this material is beneficial since it has minimal effect upon the signal transmitted and received by the electronic communications device.

In another embodiment, the conducting element comprises conductive material that is copper having a thickness of 0.1 mm.

In another embodiment, the layers of dielectric material that coat the conducting element are mixed and sprayed in layers onto the conducting element.

In an embodiment, the conducting element is coated on both sides with layers of dielectric materials.

In another aspect, the present invention provides a method of manufacturing an attachment for an electronic communications device including:
forming a conducting element;
coating the conducting element with layers of dielectric material ;
allowing the layers to dry, and
securely attaching the coated conducting element to a non-conducting substrate characterised in that the dielectric material is a composition including, as a major proportion of the composition, Al₂O₃, SiO₂ and Ag₂O.

In yet another aspect, the present invention provides an attachment manufactured in accordance with the method of the present invention.

In an embodiment, the conducting element once coated with dielectric material is subsequently coated with a UV acrylic material including an acrylic resin, a monomer, a photo-initiator, additives and solvents.

The electronic communications device may be any device including a mobile phone or a tablet device such as an iPad manufactured by the Apple Corporation, or any other electronic communications device that may be held in close proximity to a user.

The conducting element is held in sufficiently close proximity to the electronic communications device to become electromagnetically coupled with the electromagnetic field emanating from the device. It is the electromagnetic coupling of the conducting element that enables the conducting element to channel radiation emitting from the device and when appropriately configured in a direction away from the user.

In an embodiment, the dielectric material includes Al₂O₃, SiO₂ Ag₂O, B₂O₃, MgO, Fe₂O₃, Na₂O, K₂O, CaO, P₂O₅, Au, TiO₂ and/or FeO.

In an embodiment, dielectric materials are mixed together in a liquid form and applied in layers to the conducting element by spraying the liquid in a fine mist onto the conducting element. In one embodiment, the conducting element has layers of dielectric material applied in layers to both sides of the conducting element.

In embodiments, the conducting element includes various shaped segments of conducting material and may include V-shaped segments, chevron-shaped segments, linear segments, rectangular and/or triangular segments or any segments or combinations thereof that enable the conducting element to channel electromagnetic radiation to and from the electronic communications device such that the radiation is ported to and from the electronic communications device through the side of the device to which the attachment is attached and hence, reducing the exposure of the user to electromagnetic radiation emanating from and received by the electronic communications device.

An attachment according to the present invention effectively forms a bi-directional band pass filter which allows only signals with a particular frequency range to pass through the filter. The bi-directionality of the filter allows signals (within the relevant band of frequencies) to pass to and from the electronic communications device.

Careful selection of materials forming the conducting element, the conducting element substrate and coatings for the conducting element enable the attachment to achieve a significant reduction in the Specific Absorption Rate (SAR) of radiation in the direction of the user of the electronic communications device without any significant effect upon the strength of the signal transmitted from, or received by, the electronic communications device.

Further, it has been discovered that upon careful selection of a mixture of dielectric materials combined with a configuration of conducting sub-elements comprising the conducting element, allows the formation of a single attachment that provides an appropriate reduction in SAR across a range of electronic communication devices within a group of these devices. In the instance of the electronic communications device comprising a mobile phone, careful selection of materials and the configuration of the conducting element can enable the manufacture of a single attachment that effectively reduces the SAR across a range of mobile phones with only minimal SAR variation across the mobile phone range.

To assist in understanding the invention and to enable a skilled person to put the invention into practical effect, embodiments of the invention are described below by way of example with reference to the specific example of the electronic communications device being a mobile phone and with reference to the accompanying drawings, in which:
**FIG. 1A** illustrates a perspective view of a first conducting element;
**FIG. 1B** illustrates a perspective view of a second conducting element;
**FIG. 1C** illustrates a perspective view of the third conducting element;
**FIG. 2** illustrates an exploded view of a conducting element, various layers of dielectric materials and a non-conducting substrate that together comprise an attachment for an electronic communications device.
**FIG's. 3A and 3B** illustrate the positioning of a test mobile phone in relation to a test dummy during experimental testing both before and after adhering an attachment to the test mobile phone device.

Those skilled in the art will appreciate that minor deviations from the layout of components as illustrated in the drawings will not detract from the proper functioning of the disclosed embodiments of the present invention.

Elements of the invention are illustrated in concise outline form in the drawings, showing only those specific details that are necessary to the understanding of the embodiments of the present invention, but so as not to clutter the disclosure with excessive detail that will be obvious to skilled readers.

In this patent specification, adjectives such as first and second, left and right, front and back, top and bottom, etc., are used solely to define one component or method step from another component or method step without necessarily requiring a specific relative position or sequence that is described by the adjectives.

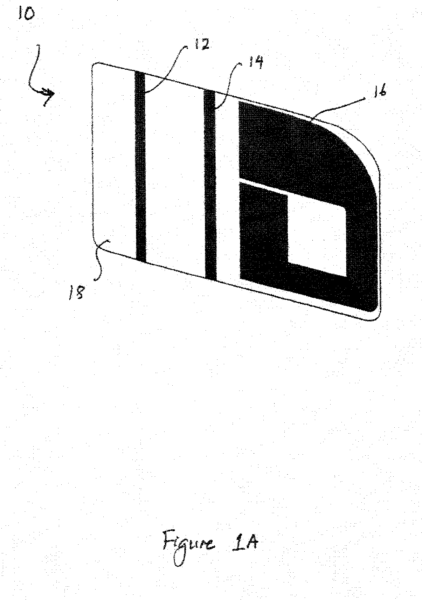

**FIG. 1A** illustrates a perspective view of a first conducting element (10). The conducting element (10) includes individual conducting sub elements (12, 14 and 16) that are attached to a flexible printed circuit board material (18).

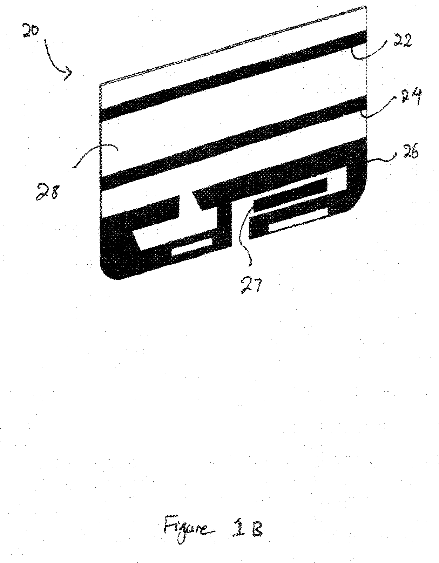

**FIG. 1B** illustrates a perspective view of a second conducting element (20). The conducting element (20) includes individual conducting sub elements (22, 24, 26 and 27) that are attached to a flexible printed circuit board material (28).

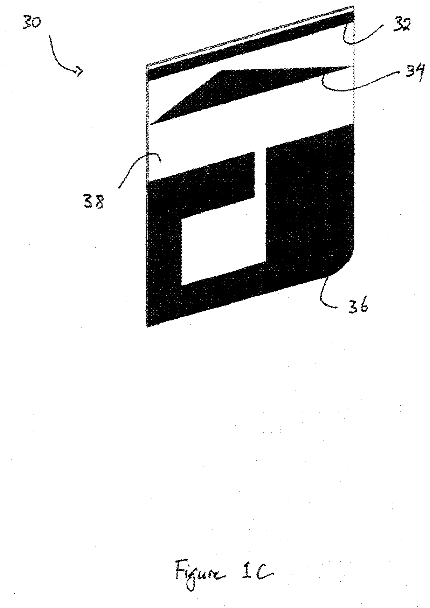

**FIG. 1C** illustrates a perspective view of a third conducting element (30). The conducting element (30) includes individual conducting sub elements (32, 34, and 36) that are attached to a flexible printed circuit board material (38).

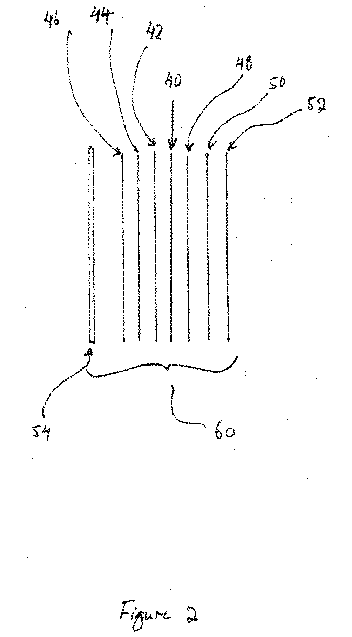

**FIG. 2** illustrates an exploded end view of a conducting element (40) with various layers of coatings and a non-conductive substrate which together, form an attachment according to an embodiment of the invention.

Referring to the embodiment in Figure 2, conducting element 40 has three layers of dielectric materials (42, 44, and 46) applied separately in a fine mist to coat the side of the conducting element (40). The opposite side of the conducting element (40) has an additional three layers of dielectric materials (48, 50 and 52) applied separately in a fine mist to coat the opposite side of the conducting element. The individual layers (42, 44, 46, 48, 50 and 52) may include the same or different dielectric material compositions and in one embodiment, layers 42 and 48 comprise the same dielectric material composition, layers 44 and 50 comprise the same dielectric material composition and layers 46 and 52 similarly comprise the same dielectric material composition. It will be appreciated that coating both sides of conducting element (40) with dielectric materials has the associated advantage of further decreasing the SAR of the mobile phone when compared to a conducting element coated with dielectric materials on only one side. Whilst not wishing to be bound by theory, it is believed that this is due to a more focused re-direction of electromagnetic radiation away from a user's head when a conducting element is coated with dielectric material on both sides. That is, whilst the dielectric material coating on one side of the conducting element (40) serves to draw away radiation from a user's head and body, the coating on the opposite side of the conducting element effectively acts as a pump so as to further draw and re-direct radiation from the mobile telephone in a direction outward from the mobile phone.

The composition of the dielectric material according to one embodiment of the invention is shown in Table 1.

**Table 1 - Composition of dielectric material**

| **Element** | **Al₂O₃** | **SiO₂** | **Ag₂O** | **MgO** | **Fe₂O₃** | **Na₂O** |
|---|---|---|---|---|---|---|
| Content% | 29.0-36.0 | 28.0-36.8 | 9.0-13.0 | 3.5-5.7 | 9.0-11.5 | 0.09-1.9 |

| **Element** | **CaO** | **P₂O₅** | **TiO₂** | **FeO** | **Au** | |
|---|---|---|---|---|---|---|
| Content% | 0.02-0.15 | 0.1-0.42 | 0.2-0.38 | 0.9-1.85 | 0.008-0.15 | |

Once the individual layers of dielectric materials that coat the conducting element (40) have been allowed to dry, the coated conducting element is securely affixed to the non-conducting substrate (54). In an embodiment, the coated conducting element is securely affixed to the non-conducting substrate (54) by use of a transfer press thus resulting in an attachment (60).

In an embodiment, the attachment (60) is coated with UV acrylic material to protect the attachment (60) from ultra violet radiation.

As will be understood by a person skilled in the relevant field of technology, the attachment (60) may be secured to an external surface of a mobile phone by glue, or by any other means.

In use, the attachment (60) directs electromagnetic radiation away from a user's head by re-directing radiation from the mobile telephone in a direction outward from the mobile phone.

Adding dielectric materials in layered coatings to the conducting element has the effect of filtering electromagnetic radiation emanating from the mobile phone that reside substantially outside the frequency range that is effective for electronic communications of the mobile phone. This can have a substantial effect upon the total radiation direction toward a user of an electronic communications device.

In an alternative embodiment, the one or more layers of the dielectric materials that are applied to the conducting element in a fine mist form have the relative percentages below:
In order to test the efficacy of the attachment for an electronic communications device, the Specific Absorption Rate (SAR), Total Isotropic Sensitivity (TIS) and Total Radiated Power (TRP) were measured under standard test conditions using a simulated user (test dummy) (10 g of simulated tissue) positioned in close proximity to a mobile phone within an anechoic chamber.

The SAR is related to the rate at which energy is absorbed per unit mass of an object exposed to radio frequency radiation and is expressed in units of W/kg. As SAR values are heavily dependent on the size of an average volume or mass, they are usually averaged and reported over a sample volume or mass (typically 1g or 10g of tissue). The TIS and TRP, measured in decibels (dB), are measures of antenna efficiency or performance and can be related to the resulting signal strength of the electronic communications device. In general, TIS is the lowest amount of power that can be input to the receiver, such that the receiver can still maintain reliable communication whilst TRP is a measure of the spherical integrated radiated power of the device.

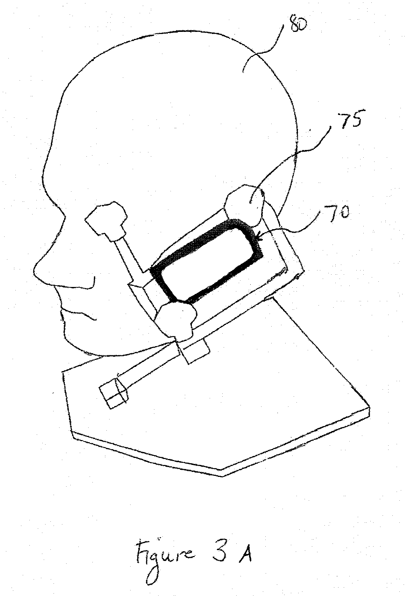

Figure 3A shows the positioning the test mobile phone device (70) without an attachment to measure the electromagnetic radiation emanating from a test mobile phone device (70). The test was conducted in relation to a test dummy head (80) (or "phantom") which included a receiving sensor (not shown) and located inside the dummy head (80). The dummy head (80) and test mobile device (70) were placed within an anechoic chamber where the dummy head (80) (simulating a mobile phone user's head) was exposed to various test radio frequencies whilst in close proximity to the test mobile phone device (70). The test dummy head (70) was composed of a polyurethane shell of thickness 2mm ± 0.2 mm filled with a homogenous tissue simulating liquid. The tissue simulating liquid comprised a sugar/salt solution with similar dielectric parameters to human brain tissue in order to simulate the brain tissue of a user's head.

During testing, the test mobile phone device (70) was held in the "cheek" position with plastic holder (75) to the dummy head (80) and the battery of the test mobile phone device (70) was fully charged before each measurement. It was ensured that all testing components were made of non-metal materials in order to avoid distortion of the electromagnetic field that can be observed in the presence of metallic components. The test mobile phone device (70) was set to transmit at its highest output peak power level.

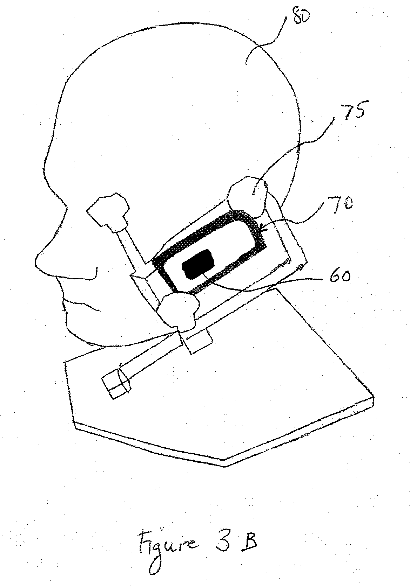

As shown in figure 3, the test mobile phone device (80) with attachment (60) (not shown) was positioned in the "cheek" position on the left and right hand sides of the simulated user's (phantom) dummy head (70). Testing was performed at an ambient temperature of between 20-25°C and once a particular test was commenced, the temperature was maintained within ± 1°C as the dielectric parameters of materials can change with temperature. The test was subsequently repeated with an attachment (60) adhered to the test mobile phone device (refer Figure 3B) and again, measurements were taken at each of the tested frequencies.

An attachment (60) was found to reduce Specific Absorption Rate (SAR) of radiation while a test mobile phone was positioned adjacent a simulated user's head. The test frequencies included 900MHz, 1,800MHz, and 2,100MHz and results are shown in Tables 2 to 5.

Table 2 relates to test results for a mobile phone manufactured by Samsung (model Galaxy S4). An attachment was secured to the face of the mobile telephone on the opposite side of the display screen.

**Table 2 - SAR Test Results for Samsung Galaxy S4 tested on 10 g of simulated tissue**

| **LET BAND 3 (1800MHz)** | | | |
|---|---|---|---|
| Phantom configuration | Testing status | Channel | SAR (WKg) |
| left side of head | Without attachment | 1890 | 0.308 |
| | With attachment | 1890 | 0. 104 |
| | | | |

| **WCDMA BAND1 (2100MHz)** | | | |
|---|---|---|---|
| Phantom configuration | Testing status | Channel | SAR (WKg) |
| left side of head | Without attachment | 9750 | 0.219 |
| | With attachment | 9750 | 0.07 |
| | | | |

| **WCDMA 900 MHz** | | | |
|---|---|---|---|
| Phantom configuration | Testing status | Channel | SAR (WKg) |
| left side of head | Without attachment | 2787 | 0.207 |
| | With attachment | 2787 | 0.042 |

Table 3 relates to test results for a mobile phone manufactured by Apple (model iPhone 5s). An attachment was secured to the face of the mobile telephone on the opposite side of the display screen.

**Table 3 - SAR Test Results for iPhone 5s tested on 10 g of simulated tissue**

| **LET BAND 3 (1800MHz)** | | | |
|---|---|---|---|
| Phantom configurations | Testing status | Channel | SAR (WKg) |
| left side of head | Without attachment | 1890 | 0.468 |
| | With attachment | 1890 | 0.061 |
| | | | |

| **WCDMA BAND1 (2100MHz)** | | | |
|---|---|---|---|
| phantom configurations | Testing status | Channel | SAR (WKg) |
| left side of head | Without attachment | 9750 | 0.702 |
| | With attachment | 9750 | 0.084 |
| | | | |

| **WCDMA 900 MHz** | | | |
|---|---|---|---|
| phantom configurations | Testing status | Channel | SAR (WKg) |
| left side of head | Without attachment | 2787 | 0. 801 |
| | With attachment | 2787 | 0.27 |

Table 4 relates to test results for a mobile phone manufactured by Blackberry (model 8700). An attachment was secured to the face of the mobile telephone on the opposite side of the display screen.

**Table 4 - SAR Test Results for Blackberry 8700 tested on 10 g of simulated tissue**

| **WCDMA BAND1 (2100 MHz)** ) | | | |
|---|---|---|---|
| Phantom configurations | Testing status | Channel | SAR (W/Kg) |
| left side of head | Without attachment | 9750 | 0.959 |
| | With attachment | 9750 | 0.104 |

Table 5 relates to test results for a mobile phone manufactured by Nokia (model 630). An attachment was secured to the face of the mobile telephone on the opposite side of the display screen.

**Table 5 - SAR Test Results for Nokia 630 tested on 10 g of simulated tissue**

| **WCDMA BAND1 (2100 MHz)** | | | |
|---|---|---|---|
| Phantom configurations | Testing status | Channel | SAR (W/Kg) |
| left side of head | Without attachment | 9750 | 0.843 |
| | With attachment | 9750 | 0.107 |

The results of Table 2 to Table 5 indicate that, when attachment (60) is secured to the face of a range of different mobile phones (opposite to the side of the phone comprising the display), the SAR value is reduced for all tested frequencies.

In one embodiment, the attachment of the present invention was also tested on an Apple iPad Air where the test device was placed near the body of a test dummy (10 g of simulated tissue) simulating a mobile phone user. Similar to the head testing, the test dummy was filled with tissue simulating liquid to simulate the body of a user. The results of this testing are shown in Table 6.

**Table 6 - SAR Test Results for Apple iPad Air tested on 10 g of simulated tissue**

| **GSM 990MHz Band** | | | | |
|---|---|---|---|---|
| Phantom configurations | Testing status | iPad air tough case | Channel | SAR (W/Kg) |
| body | Without attachment | N/A | 38 | 0.768 |
| | With attachment | Yes | 38 | 0.121 |
| | | | | |

| **GSM 1800MHz Band** | | | | |
|---|---|---|---|---|
| phantom configurations | Testing status | iPad air tough case | Channel | SAR (W/Kg) |
| body | Without attachment | N/A | 698 | 0.607 |
| | With attachment | Yes | 698 | 0.134 |
| | | | | |

| **WCDMA 1200MHz Band** | | | | |
|---|---|---|---|---|
| phantom configurations | Testing status | iPad air tough case | Channel | SAR (W/Kg) |
| body | Without attachment | N/A | 9750 | 0.745 |
| | With attachment | Yes | 9750 | 0.106 |

The results of Table 6 indicate that when an attachment in accordance with the invention is attached to the face of an iPad device (opposite to the side of the device comprising the display), the SAR value is reduced for all frequencies.

An attachment (60) was also found to not to significantly reduce the mobile phone performance (as measured by the TIS and TRP) when attached to various mobile phones when tested under a range of frequencies. The results are shown in Tables 7 to 11.

Table 7 relates to test results for a mobile phone manufactured by Apple (model iphone 5). An attachment was secured to the face of the mobile telephone on the opposite side of the display screen.

**Table 7 - TRP and TIS Test Results for Apple iphone 5 tested on 10 g of simulated tissue**

| Frequency (MHz) | Total Radiated Power (dB) | |
|---|---|---|
| | With attachment | Without attachment |
| 1950 | 16.2684 | 17.0436 |
| 836.6 | 16.3982 | 17.6826 |
| 897.6 | 16.1596 | 16.9561 |

| | Total Isotropic Sensitivity (dB) | |
|---|---|---|
| | With attachment | Without attachment |
| 1950 | 106.0852 | 107.1489 |
| 836.6 | 106.3584 | 106.8567 |
| 897.6 | 106.1254 | 106.0235 |

Table 8 relates to test results for a mobile phone manufactured by Apple (model iphone 5s). An attachment was secured to the face of the mobile telephone on the opposite side of the display screen.

**Table 8 - TRP and TIS Test Results for Apple iphone 5s tested on 10 g of simulated tissue**

| Frequency (MHz) | Total Radiated Power (dB) | |
|---|---|---|
| | With attachment | Without attachment |
| 1950 | 16.9534 | 17.2349 |
| 836.6 | 16.0269 | 16.5863 |
| 897.6 | 15.9563 | 16.1574 |

| | Total Isotropic Sensitivity (dB) | |
|---|---|---|
| | With attachment | Without attachment |
| 1950 | 105.2698 | 106.5324 |
| 836.6 | 105.1586 | 106.0124 |
| 897.6 | 104.3248 | 104.6357 |

Table 9 relates to test results for a mobile phone manufactured by Samsung (model Galaxy S4). An attachment was secured to the face of the mobile telephone on the opposite side of the display screen.

**Table 9 - TRP and TIS Test Results for Samsung Galaxy S4 tested on 10 g of simulated tissue**

| Frequency (MHz) | Total Radiated Power (dB) | |
|---|---|---|
| | With attachment | Without attachment |
| 1950 | 16.3241 | 16.6581 |
| 836.6 | 14.3596 | 15.0145 |
| 897. 6 | 14.2158 | 14.9652 |

| | Total Isotropic Sensitivity (dB) | |
|---|---|---|
| | With attachment | Without attachment |
| 1950 | 106.0541 | 106.9652 |
| 836.6 | 104.1563 | 105.2365 |
| 897.6 | 103.2486 | 104. 7563 |

Table 10 relates to test results for a mobile phone manufactured by Samsung (model Galaxy S5). An attachment was secured to the face of the mobile telephone on the opposite side of the display screen.

**Table 10 - TRP and TIS Test Results for Samsung Galaxy S5 tested on 10 g of simulated tissue**

| Frequency (MHz) | Total Radiated Power (dB) | |
|---|---|---|
| | With attachment | Without attachment |
| 1922.4 | 16.5621 | 16.8631 |
| 1950 | 15.6891 | 16. 1258 |
| 1977.6 | 14.9653 | 15.0241 |

| | Total Isotropic Sensitivity (dB) | |
|---|---|---|
| | With attachment | Without attachment |
| 2112.4 | 107. 1473 | 107.3542 |
| 2140 | 105.7532 | 106.1569 |
| 2167.6 | 104.6852 | 105.2461 |

Table 11 relates to test results for a mobile phone manufactured by Blackberry (model 8700). An attachment was secured to the face of the mobile telephone on the opposite side of the display screen.

**Table 11 - TRP and TIS Test Results for Blackberry 8700 tested on 10 g of simulated tissue**

| Frequency (MHz) | Total Radiated Power (dB) | |
|---|---|---|
| | With attachment | Without attachment |
| 1710.2 | 15.1574 | 19.8251 |
| 1747.4 | 16.5641 | 20.6586 |
| 1784.8 | 15.7543 | 18.9651 |

| | Total Isotropic Sensitivity (dB) | |
|---|---|---|
| | With attachment | Without attachment |
| 1805.2 | 108.381 | 123.514 |
| 1842.4 | 107.525 | 110.128 |
| 1879.8 | 107.146 | 111.682 |

The results of Table 7 to Table 11 indicate that, when attachment (60) is secured to the face of a range of different mobile phones (opposite to the side of the phone comprising the display), the signal strength, as indicated by measured TRP and TIS values, is not significantly reduced for all tested frequencies.

In one embodiment, the attachment (60) is configured to be substantially the same size and shape as the rear face of a mobile phone which assists users when affixing the attachment (60) to correctly and accurately physically locate the conducting element with respect to the antenna of the mobile phone.

In summary, the present invention provides an attachment that, when affixed to an electronic communications device, reduces electromagnetic radiation levels directed toward a user whilst not substantially decreasing the signal strength of the device. Coating the conducting element with materials that exhibit dielectric properties, allows the attachment to function over a wide range of frequencies and reduces the electromagnetic radiation directed toward a user. Further, in an embodiment, forming a conducting element from flexible printed circuit board with copper conducting sub-elements of approximate thickness of 0.1mm and layered coatings applied by micronic spraying and attaching the coated conducting element to a non-conducting substrate with an approximate thickness of 0.2mm, the overall thickness of the resulting attachment is approximately 0.3mm. Manufacturing an attachment in this manner allows a user to secure the attachment to a face of their electronic communications device and attach any protective casing preferred by the user without the attachment interfering with the fitment of the protective casing.

The above description is not intended to be exhaustive or to limit the invention to a single disclosed embodiment. As mentioned above, numerous alternatives and variations to the present invention will be apparent to those skilled in the relevant field of technology. Accordingly, while some alternative embodiments have been discussed specifically, other embodiments will be apparent or relatively easily developed, by those of requisite skill. Accordingly, this patent specification is intended to embrace all alternatives, modifications and variations of the present invention that have been discussed herein.

## Claims

1. An attachment (60) for an electronic communications device including a conducting element (40) that is coated on one side with layers (42, 44, 46; 48, 50, 52) of dielectric material and securely affixed to a non-conducting substrate (54) such that the overall dimensions and thickness of the attachment are sufficiently small that it may be attached to a surface of an electronic communications device whilst allowing the use of a protective casing preferred by the user, **characterised in that** the dielectric material is a composition including, as a major proportion of the composition, Al₂O₃, SiO₂ and Ag₂O.

2. An attachment (60) according to claim 1 wherein the dielectric material further includes any one or more of B₂O₃, MgO, Fe₂O₃, Na₂O, K₂O, CaO, P₂O₅, Au, TiO₂ and/or FeO.

3. An attachment (60) according to claim 1 or claim 2 wherein the non-conducting substrate (54) comprises PTFE (polytetrafluoroethylene) that is about 0.2mm in thickness.

4. An attachment (60) according to any one of the preceding claims wherein the conducting element (40) comprises conductive material that is copper having a thickness of about 0.1mm.

5. An attachment (60) according to any one of the preceding claims wherein the conducting element (40) includes various shaped segments of conducting material and incudes V-shaped segments, chevron-shaped segments, linear segments, rectangular and/or triangular segments or any segments or combinations thereof.

6. An attachment (60) according to any one of the preceding claims wherein the layers (42, 44, 46; 48, 50, 52) of dielectric material that coat the conducting element (40) are mixed and sprayed in layers onto the conducting element.

7. An attachment (60) according to any one of the preceding claims wherein the conducting element (40) is coated on both sides with layers (42, 44, 46; 48, 50, 52) of the dielectric material.

8. An attachment (60) according to claim 6 or claim 7 wherein the coated conducting element (40) is subsequently coated with UV acrylic material.

9. A method of manufacturing an attachment (60) for an electronic communications device including:
forming a conducting element (40);
coating the conducting element with layers (42, 44, 46; 48, 50, 52) of dielectric material ;
allowing the layers (42, 44, 46; 48, 50, 52) to dry, and
securely attaching the coated conducting element (40) to a non-conducting substrate (54)
**characterised in that** the dielectric material is a composition including, as a major proportion of the composition, Al₂O₃, SiO₂ and Ag₂O.

10. An attachment (60) manufactured in accordance with the method of claim 9.

## Patentansprüche

1. Befestigung (60) für eine elektronische Kommunikationsvorrichtung, die ein leitendes Element (40) umfasst, das auf einer Seite mit Schichten (42, 44, 46; 48, 50, 52) aus Dielektrikum beschichtet und an einem nicht leitenden Substrat (54) sicher befestigt ist, sodass die Gesamtabmessungen und die Dicke der Befestigung ausreichend klein sind, dass es an einer Fläche einer elektronischen Kommunikationsvorrichtung befestigt werden kann, während es die Verwendung von einem Schutzgehäuse ermöglicht, die vom Benutzer bevorzugt wird, **dadurch gekennzeichnet, dass** das Dielektrikum eine Zusammensetzung ist, die als einen Hauptanteil der Zusammensetzung Al₂O₃, SiO₂ und Ag₂O umfasst.

2. Befestigung (60) nach Anspruch 1, wobei das Dielektrikum ferner eines oder mehrere von B₂O₃, MgO, Fe₂O₃, Na₂O, K₂O, CaO, P₂O₅, Au, TiO₂ und/oder FeO umfasst.

3. Befestigung (60) nach Anspruch 1 oder Anspruch 2, wobei das nicht leitende Substrat (54) PTFE (Polytetrafluorethylen) umfasst, das ungefähr 0,2 mm dick ist.

4. Befestigung (60) nach einem der vorstehenden Ansprüche, wobei das leitende Element (40) leitendes Material umfasst, das Kupfer mit einer Dicke von ungefähr 0,1 mm ist.

5. Befestigung (60) nach einem der vorstehenden Ansprüche, wobei das leitende Element (40) verschiedene geformte Segmente aus leitendem Material und V-förmige Segmente, umgekehrt V-förmige Segmente, lineare Segmente, rechteckige und/oder dreieckige Segmente oder irgendwelche Segmente oder Kombinationen davon umfasst.

6. Befestigung (60) nach einem der vorstehenden Ansprüche, wobei die Schichten (42, 44, 46; 48, 50, 52) aus Dielektrikum, die das leitende Element (40) beschichten, gemischt und in Schichten auf das leitende Element gesprüht werden.

7. Befestigung (60) nach einem der vorstehenden Ansprüche, wobei das leitende Element (40) auf beiden Seiten mit Schichten (42, 44, 46; 48, 50, 52) aus Dielektrikum beschichtet ist.

8. Befestigung (60) nach Anspruch 6 oder Anspruch 7, wobei das beschichtete leitende Element (40) anschließend mit UV-Acrylmaterial beschichtet wird.

9. Verfahren zum Herstellen einer Befestigung (60) für eine elektronische Kommunikationsvorrichtung, umfassend:
Bilden eines leitenden Elements (40);
Beschichten des leitenden Elements mit Schichten (42, 44, 46; 48, 50, 52) aus Dielektrikum;
Trocknen Lassen der Schichten (42, 44, 46; 48, 50, 52) und
sicheres Befestigen des beschichteten leitenden Elements (40) an einem nicht leitenden Substrat (54)
**dadurch gekennzeichnet, dass** das Dielektrikum eine Zusammensetzung ist, die als einen Hauptanteil der Zusammensetzung Al₂O₃, SiO₂ und Ag₂O umfasst.

10. Befestigung (60), die gemäß dem Verfahren nach Anspruch 9 hergestellt ist.

## Revendications

1. Système de fixation (60) pour un dispositif de communication électronique comprenant un élément conducteur (40) qui est revêtu sur un côté muni de couches (42, 44, 46 ; 48, 50, 52) de matériau diélectrique et fixé de manière sûre à un substrat non conducteur (54) de sorte que les dimensions générales et l'épaisseur système de fixation sont suffisamment petites pour qu'il puisse être attaché à une surface d'un dispositif de communication électronique tout en permettant l'utilisation d'un boîtier protecteur privilégié par l'utilisateur, **caractérisé en ce que** le matériau diélectrique est une composition comprenant, en tant que proportion principale de la composition, Al₂O₃, SiO₂ et Ag₂O.

2. Système de fixation (60) selon la revendication 1, dans lequel le matériau diélectrique inclut en outre un ou plusieurs de B₂O₃, MgO, Fe₂O₃, Na₂O, K₂O, CaO, P₂O₅, Au, TiO₂ et/ou FeO.

3. Système de fixation (60) selon la revendication 1 ou la revendication 2, dans lequel le substrat non conducteur (54) comprend du PTFE (polytétrafluoroéthylène) qui présente une épaisseur d'environ 0,2 mm.

4. Système de fixation (60) selon l'une quelconque des revendications précédentes, dans lequel l'élément conducteur (40) comprend un matériau conducteur qui consiste en du cuivre présentant une épaisseur d'environ 0,1 mm.

5. Système de fixation (60) selon l'une quelconque des revendications précédentes, dans lequel l'élément conducteur (40) inclut des segments à formes variées de matériau conducteur et inclut des segments en forme de V, des segments en forme de chevron, des segments linéaires, des segments rectangulaires et/ou triangulaires ou tout segment ou combinaison de ceux-ci.

6. Système de fixation (60) selon l'une quelconque des revendications précédentes, dans lequel les couches (42, 44, 46 ; 48, 50, 52) de matériau diélectrique qui revêtissent l'élément conducteur (40) sont mixées et pulvérisées en couches sur l'élément conducteur.

7. Système de fixation (60) selon l'une quelconque des revendications précédentes, dans lequel l'élément conducteur (40) est revêtu sur les deux côtés munis de couches (42, 44, 46 ; 48, 50, 52) du matériau diélectrique.

8. Système de fixation (60) selon la revendication 6 ou la revendication 7, dans lequel l'élément conducteur revêtu (40) est subséquemment revêtu d'un matériau acrylique résistant aux UV.

9. Procédé de production d'un système de fixation (60) pour un dispositif de communication électronique comprenant :
la formation d'un élément conducteur (40) ;
le revêtement de l'élément conducteur muni de couches (42, 44, 46 ; 48, 50, 52) de matériau diélectrique ;
le fait de permettre aux couches (42, 44, 46 ; 48, 50, 52) de sécher, et
l'attachement de manière sûre de l'élément conducteur revêtu (40) à un substrat non conducteur (54)
**caractérisé en ce que** le matériau diélectrique est une composition comprenant, en tant que proportion principale de la composition, Al₂O₃, SiO₂ et Ag₂O.

10. Système de fixation (60) fabriqué conformément au procédé selon la revendication 9.
